# EUROPEAN PATENT APPLICATION

(11) **EP 1 394 685 A2**
(43) Date of publication of application: **03.03.2004**
(21) Application number: 03255301.8
(22) Date of filing: 27.08.2003
(51) Int. Cl.: G06F 13/42

(54) **Data processor, packet recognition method, and error correction method**

(30) Priority: 27.08.2002 JP 2002247060
(71) Applicant: FUJITSU LIMITED, Kawasaki-shi, Kanagawa 211-8588 (JP)
(72) Inventor: Aoshima, Kazuhiro, Shuchi-gun, Shizuoka 437-0208 (JP)
(74) Representative: Williams, Michael Ian

(57) **Abstract**

A data processor that increases transmission efficiency is disclosed. The data processor communicates data to and from a host computer (11) via an interface (13) with a packet including a packet ID. The data processor includes a packet recognition circuit (22) for receiving the packet including the packet ID from the host computer and recognizing the type of the packet from the packet ID. A packet length measuring circuit (23) measures packet length of the packet received from the host computer and determines whether the measured packet length is in accordance with the packet type recognized by the packet determination circuit.

## Description

The present invention relates to a data processor, a packet recognition method, and an error correction method. More particularly, the present invention relates to a data processor for performing data communication with a host computer through a USB interface.

A universal serial bus (USB) is a serial interface that has become widely used for communication between a computer provided with a host function (e.g., personal computer) and peripheral devices connected to the computer. When communication is performed between a PC (hereafter referred to as a USB host) and a peripheral device (hereafter referred to as a USB device) with the USB, it is required that errors be detected at an early state to transfer data efficiently.

Data transfer with the USB is normally performed in a transfer unit referred to as a transaction. Each transaction mainly uses a token packet, a data packet, and a handshake packet.

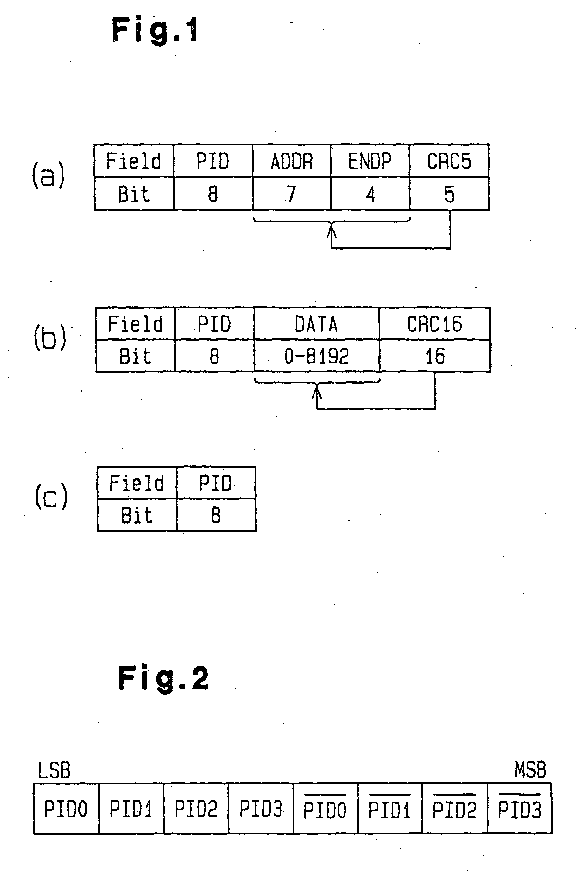

Figs. 1(a) to 1(c) are tables illustrating the formats of the packets. Referring to Fig. 1(a), the token packet has a fixed length of twenty-four bits, which includes eight bits of a packet ID (PID), seven bits of a USB address (ADDR), four bits of an end point number (ENDP), and five bits of a cyclic redundancy check, or a CRC (CRC5). The packet ID is used to recognize the packet, and the USB address is used to recognize the USB device. The end point number is used to recognize an end point (transfer type) of the USB device, and the CRC is used to check the USB address and the end point number.

Referring to Fig. 1(b), the data packet has a variable length of 24 to 8216 bits, which includes eight bits of a PID, 0 to 8192 bits of a data field (DATA), and sixteen bits of a CRC (CRC16). The CRC 16 is used to check the data field.

As shown in Fig. 1(c), the handshake packet has a fixed length of eight bits, all of which are for a PID.

The type of each packet is recognized from the data pattern of the corresponding PID (eight bits).

Fig. 2 is a table illustrating the format of the PID. The PID includes PID0 to PID3 (four bits) and /PID0 to /PID3 (four bits), which is the inverted pattern of PID0 to PID3. The packets received by the USB host or the USB device is recognized from the data patterns (total of sixteen) of the PID (eight bits).

Figs. 3(a) and 3(b) are flowcharts illustrating the flow of transaction processing. Fig. 3(a) illustrates IN transaction processing performed when transferring data from the USB device to the USB host.

The USB host first transmits an IN token packet to the USB device and notifies the USB device of the initiation of IN transaction transfer. In response to the IN token packet, the USB device transmits a data packet, which includes inherent data, to the USB host. The USB host transmits an ACK handshake packet, which indicates that the data packet has been normally received, to the USB device. The USB device confirms that data transfer has been normally completed when receiving the ACK handshake packet.

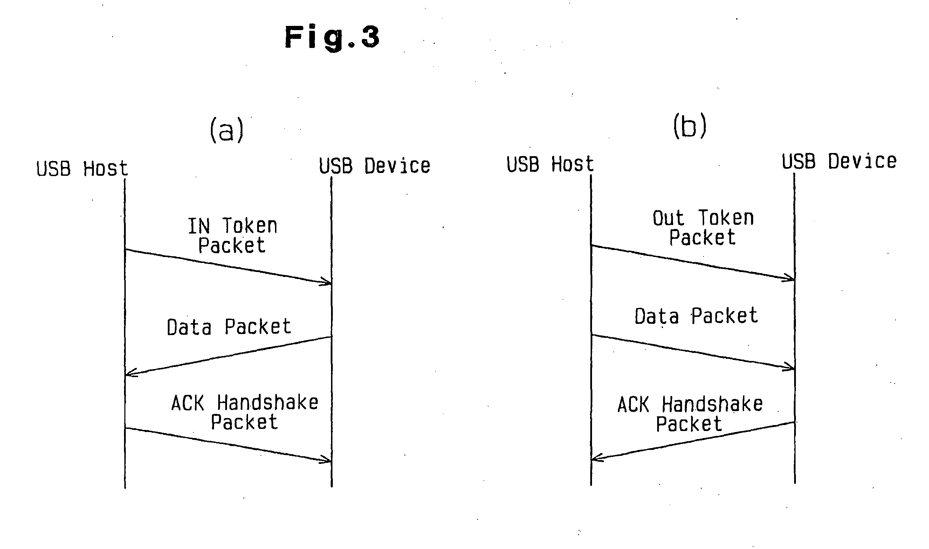

Fig. 3(b) illustrates OUT transaction processing when transferring data from the USB host to the USB device.

The USB host first transmits an OUT token packet to the USB device and notifies the USB device of the initiation of OUT transaction. Then, the USB host transmits a data packet, which includes inherent data, to the USB device. The USB device transmits an ACK handshake packet to the USB host when the data packet has been normally received. The USE host confirms that transfer has been completed normally by receiving the ACK handshake packet.

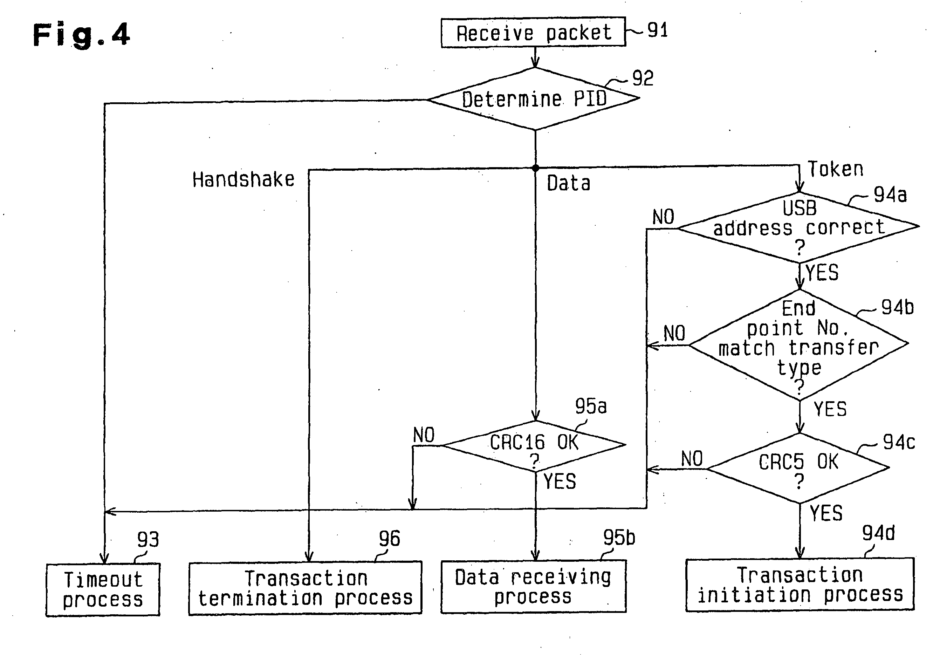

Fig. 4 is a flowchart illustrating a packet recognition process performed by the USB device in.the prior art. When the USB device receives a packet (step 91), the USB device determines the type of the packet from the data pattern of the PID (step 92). In this state, when the packet is not any of a token packet, a data packet, and a handshake packet, the USB device performs a timeout process, or suspends data processing (step 93).

In step 92, if the PID is a token packet, the USB device determines whether the received USB address (ADDR) is correct (step 94a).

When the USB address is correct (i.e., when the USB address is its own address), the USB device determines whether the end point number (ENDP) matches the transfer type (step 94b). For example, when the transfer type of the end point set for the USB device is a receiving type but an end point number representing the transmitting type is received, the USB device determines that there is an error.

When the end point number indicates its transfer type, the USB address checks whether the data values of the USB address (ADDR) and the end point number (ENDP) are correct with the CRC5 (step 94c). In this state, if the data values are correct, the USB device starts a transaction (step 94d). If there is an error in any one of the steps 94a to 94c, the USB device performs a timeout process (step 93).

In step 92, if the PID represents a data packet, the USB device checks whether the data value of the received data field (DATA) is correct with the CRC 16 (step 95a). When the data value is correct, the USB device performs a data receiving process (step 95b). When the data value is incorrect, the USB device performs a timeout process (step 93).

In step 92, if the PID represents a handshake packet, the USB device ends the transaction (step 95).

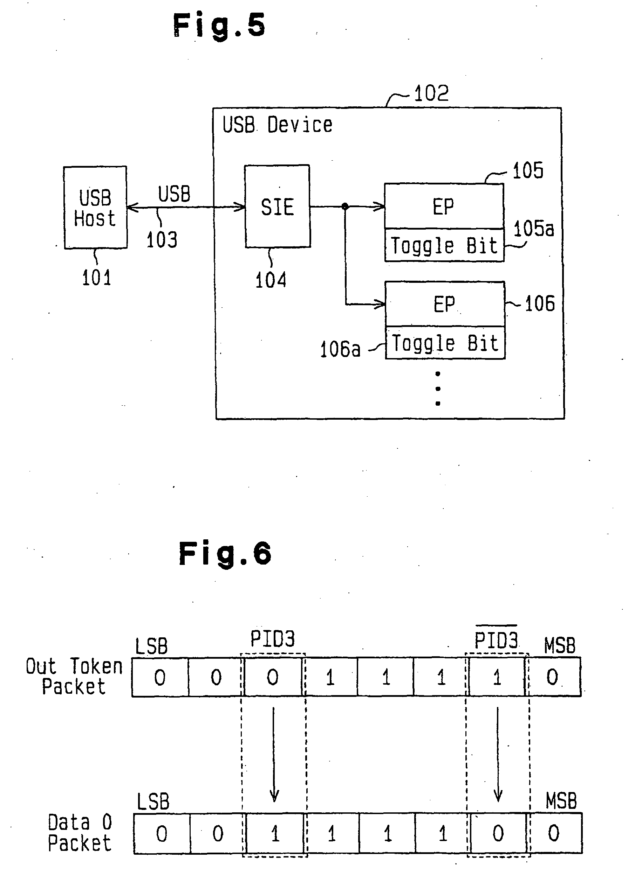

The error detection and correction function of the USB device in the prior art USB device will now be discussed. Fig. 5 is a schematic block diagram of an error correction circuit in the prior art USB device 102. The USB device 102 is connected to a USE host 101 by a USB 103. The USB device 102 includes a serial interface engine (SIE) 104 and a plurality of end points (only two shown) 105 and 106.

The SIE 104 is provided with a function for decoding packets received from the USB host 101 to convert digital data and a function for formatting packets transmitted to the USB host 101.

Each of the end points 105 and 106 is a first in first out (FIFO) provided with an inherent data storage section and a transfer function. The transfer type (e.g., receiving type, transmitting type, transmitting-receiving type) of the USB device 102 is determined by the FIFO characteristic of each of the end points 105 and 106. The end point number (ENDP) corresponding to the FIFO is allocated to each of the end points 105 and 106. The end points 105 and 106 respectively have sections (referred to as toggle bits in Fig. 5) 105a and 106a for storing data toggle bits.

In the prior art, the USB device 102 performs error detection and correction with the data toggle bits stored in the end points 105 and 106. More specifically, when the end point 105 is a transmitting type (FIFO provided with a transmitting function) and the value of the data toggle bit stored in the section 105a is "0", the USB device 102 transmits a corresponding data packet (hereafter referred to as data 0 packet. When the value of the data toggle bit stored in the section 105a is "1", the USB device 102 transmits a corresponding data packet (hereafter referred to as data 1 packet.

When receiving the ACK handshake packet from the USB host 101, the USB device 102 changes the value of the data toggle bit stored in the section 105a. When the ACK handshake packet is not received, the USB device 102 does not change the value of the data toggle bit in the section 105a (data toggle bit error occurs).

Accordingly, when the value of the data toggle bit stored in the end points 105 and 106 toggles, such as "0", "1", "0", "1" and so on, the USB device 102 determines that data transfer is being performed normally. When the ACK handshake packet is not received, the USB device 102 does not change the value of the data toggle bit and produces a data toggle bit error. In such a case, the USB device 102 detects a data toggle bit error by receiving the next IN token packet from the USB host 101. Then, the USB device transmits the data packet again. Afterward, the USB device 102 receives the ACK handshake packet of the retransmitted data packet to change the value of the data toggle bit and correct the error (resets the error).

However, the prior art has the following shortcomings.

### 1. Decrease of transmission efficiency due to packet error determination

Due to reflection or noise in a bus cable (USB 103), the data value of a signal transferred through the USB 103 may change. Packets are recognized from the data pattern of the PID (packet ID). Therefore, for example, when noise inverts two corresponding bits of the bits PID0 to PID3 and /PID0 to /PID3, the packet recognition is not performed properly.

Referring to Fig. 6, for example, when the PID has the data pattern of the OUT token packet, inverting of the bit values of PID3 ("0") and the corresponding /PID3 ("1") would result in the PID having the data pattern of the data 0 packet. In other words, the USE device 102 erroneously determines that the OUT token packet transmitted from the USB host 101 is a data 0 packet.

Erroneous determination of a packet decreases the transmission efficiency and lowers the performance capacity of the entire system. In a high speed mode, such as in a USB 2.0 specification, the data transmission speed is 480 Mbps and thus high, and the signal amplitude is 400 mV and thus small. Therefore, erroneous determination of a packet has a tendency to occur. Accordingly, operation speeds cannot be increased.

### 2. Decrease of transmission efficiency due to delay in error detection and error correction.

In the prior art, when the USB device cannot receive the ACK handshake packet and a data toggle bit error occurs, the USB device 102 cannot return until receiving the next token packet (more specifically, an IN token packet) from the USB host 101. That is, the end point in which the data toggle bit error occurs continues to have the data toggle bit error until receiving the next transfer request from the USE host 101.

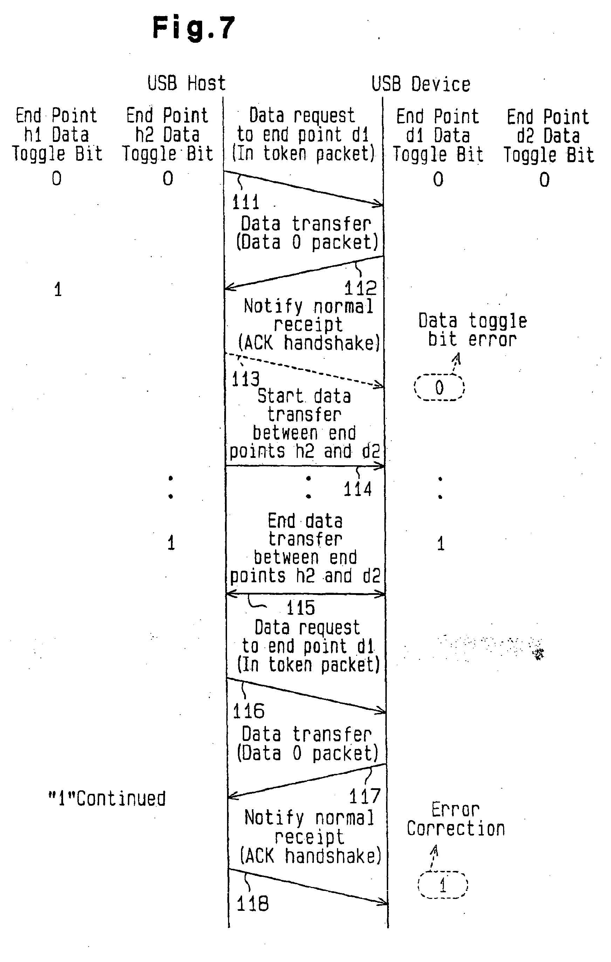

Fig. 7 is a flowchart illustrating error correction in the prior art. To facilitate description, the end points of the USB host 101 used in each transaction are referred to as end points h1 and h2, and the end points of the USB device 102 are referred to as end points d1 and d2.

The USB host 101 starts a first transaction between the end point h1 and the end point d1. More specifically, the USB host 101 transmits an IN token packet and requests for data transfer (step 111). In response to the IN token packet, the USB device 102 transmits the data 0 packet to the USB host 101 in accordance with the value ("0") of the data toggle bit stored in the end point d1 (step 112). When receiving the data 0 packet, the USB host 101 changes the data toggle bit of the end point h1 from "0" to "1" and transmits the ACK handshake packet to the USB device 102 (step 113).

In this state, when the USB device 102 cannot receive the ACK handshake packet from the USB device 102 for one reason or another (as shown by the broken line is Fig. 7), the USB device 102 does not change the value of the data toggle bit of the end point d1 from "0". In other words, the end point d1 has a data toggle bit error.

In this state, the USB host 101 starts the next (second) transaction with the end point d2 of the USB device 102 (step 114). The second transaction will not be described in detail. When one of the USB host 101 and the USB device 102 receives an ACK handshake packet from the other one of the USB host 101 and the USB device 102 and the second transaction ends normally (step 115), each data toggle bit of the end point h2 and the end point d2 is changed from "0" to "1".

Afterward, the USB host 101 starts the next (third) transaction between the end point h1 and the end point d1 of the USB device 102. More specifically, the USB host 101 transmits the IN token packet and requests the transfer of data (step 116). In response to the IN token packet, the USB device 102 transmits a data 0 packet, which corresponds to value "0" of the data toggle bit stored in the end point d1, to the USB host 101 (step 117). The USB device 102 detects a data toggle bit error (the data toggle bit value being continuously held at "0"), which has occurred since the ACK handshake has not been received and retransmits the data 0 packet.

When receiving the data 0 packet, the USB host 101 transmits the ACK handshake packet to the USB device 102. However, in the third transaction, the data that the USB host 101 requests the USB-device 102 for is a data 1 packet, and the received data differs from the expected data. Thus, the USB host 101 does not acknowledge the received data 0 packet as valid data and thus does not change the data toggle bit "1" of the end point h1.

When the USB device 102 receives the ACK handshake packet from the USB host 101 (step 118), the USB device changes the data toggle bit value of the end point d1 from "0" to "1". This resets the end point d1 from the data toggle bit error.

In this manner, since the USB device 102 could not receive the ACK handshake packet of the first transfer data, the end point d1 must hold the same transfer data (e.g., the data [0] packet) until the next transfer request is given when a data toggle bit error occurs.

In this case, since the end point d1, which has the error, cannot prepare new transfer data (data [1] packet), the end point d1 cannot immediately respond to the next transaction from the USB host 101. That is, when the next transfer request from the USB host 101 is received, the end point d1 must perform transactions (steps 116 to 118) for detecting and correcting errors. Thus, the USB host 101 must send a transfer request again to the end point d1 after correcting the error (after step 118). In this case, unnecessary transactions for detecting and correcting errors are performed. Thus, the bandwidth of the USB 103 is not used effectively. This decreases the transmission efficiency. As a result, the performance capacity of the entire system decreases.

One aspect of the present invention provides a data processor for communicating data to and from a host computer via an interface with a packet including a packet ID. The data processor includes a packet recognition circuit for receiving the packet including the packet ID from the host computer and recognizing the type of the packet from the packet ID. A packet length measuring circuit is connected to the packet recognition circuit for measuring packet length of the packet received from the host computer and determining whether the measured packet length is in accordance with the packet type recognized by the packet determination circuit.

Another aspect of the present invention provides a data processor for communicating data to and from a host computer via an interface. The data processor includes a plurality of end points, each processing a transaction corresponding to a data transfer request from the host computer. Each of the end points stores a data toggle bit having a value that is inverted whenever a predetermined packet from the host computer is received. A toggle bit switching circuit is connected to the end points to determine whether a first end point that received a transfer request in a previous transaction and a second end point that received a transfer request in the present transaction are substantially the same. The toggle bit switching circuit inverts the value of the data toggle bit stored in the first end point when the first end point differs from the second end point.

A further aspect of the present invention provides a data processor for communicating data to and from a host computer via a predetermined interface with a packet including a packet ID. The data processor includes a packet recognition circuit for receiving the packet including the packet ID from the host computer and recognizing the type of the packet from the packet ID. A packet length measuring circuit is connected to the packet recognition circuit for measuring packet length of the packet received from the host computer and determining whether the measured packet length is in accordance with the packet type recognized by the packet determination circuit. The data processor also includes a plurality of end points, each processing a transaction corresponding to a data transfer request from the host computer. Each of the end points stores a data toggle bit having a value that is inverted whenever receiving a predetermined packet from the host computer. A toggle bit switching circuit is connected to the end points to determine whether a first end point that received a transfer request in a previous transaction and a second end point that received a transfer request in the present transaction are substantially the same. The toggle bit witching circuit inverts the value of the data toggle bit stored in the first end point when the first end point differs from the second end point.

A further aspect of the present invention provides a method for recognizing the type of a packet, which includes a predetermined packet length and a packet ID, in a data processor communicating data to and from a host computer via an interface. The method includes receiving the packet from the host computer via the interface, recognizing the type of the received packet from the packet ID, measuring a packet length of the received packet, and determining whether the measured packet length is in accordance with the packet type recognized from the packet ID.

A further aspect of the present invention provides a method for correcting an error in a data processor communicating data to and from a host computer via an interface. The data processor includes a plurality of end points, each processing a transaction corresponding to a data transfer request from the host computer, and each of the end points storing a data toggle bit having a value that is inverted whenever a normal receipt acknowledgement from the host computer is received. The error is a data toggle bit error in which the data toggle bit is not inverted when the data processor does not receive the normal receipt acknowledgement from the host computer. The method includes determining whether a first end point of the plurality of end points that received a transfer request in a previous transaction and a second end point of the plurality of end points that received a transfer request in the present transaction are substantially the same, and inverting the value of the data toggle bit stored in the first end point when the first end point differs from the second end point.

A further aspect of the present invention provide a method for controlling a data processor communicating data to and from a host computer via a USB interface. The data processor includes a plurality of end points, each processing a transaction corresponding to a data transfer request from the host computer, and each of the end points storing a data toggle bit having a value that is inverted whenever a handshake packet from the host computer is received. The method includes determining whether a first end point of the plurality of end points that received a transfer request in a previous transaction and a second end point of the plurality of end points that received a transfer request in the present transaction are substantially the same, and inverting the value of the data toggle bit stored in the first end point when the first end point differs from the second end point.

The invention and preferred objects and advantages thereof, may best be understood by reference to the following description of the certain exemplifying embodiments together with the accompanying drawings in which:
Figs. 1(a) to 1(c) are tables illustrating the format of packets in the prior art;
Fig. 2 is a table illustrating the format of a PID in the prior art;
Fig. 3 is a flowchart illustrating the flow for processing a transaction in the prior art;
Fig. 4 is a flowchart illustrating the recognition of a packet in the prior art;
Fig. 5 is a block diagram schematically illustrating the configuration of a data toggle bit error correction circuit in the prior art;
Fig. 6 is a chart illustrating a case in which a packet error determination occurs;
Fig. 7 is a flowchart illustrating the correction of a data toggle bit error in the prior art;

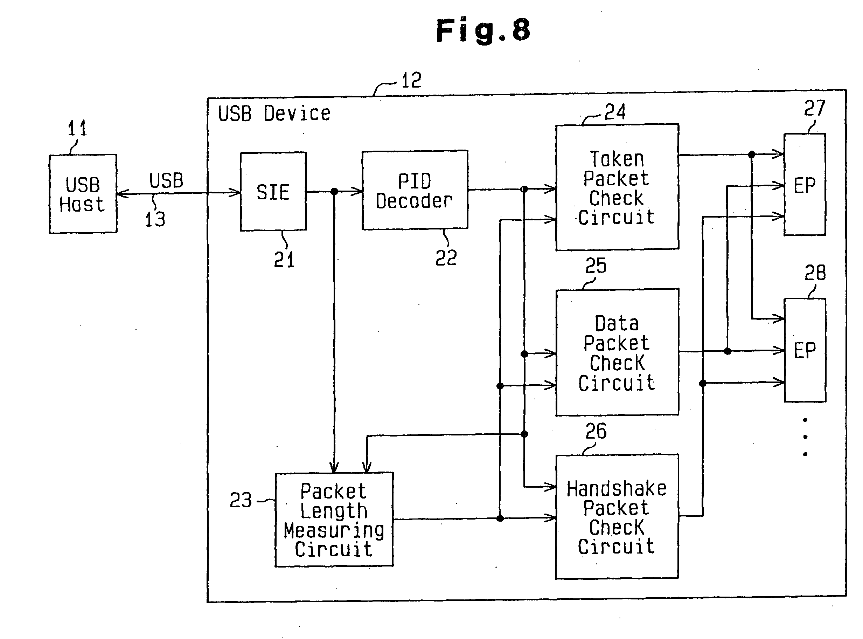

Fig. 8 is a schematic block diagram illustrating a data processor according to a first embodiment of the present invention;

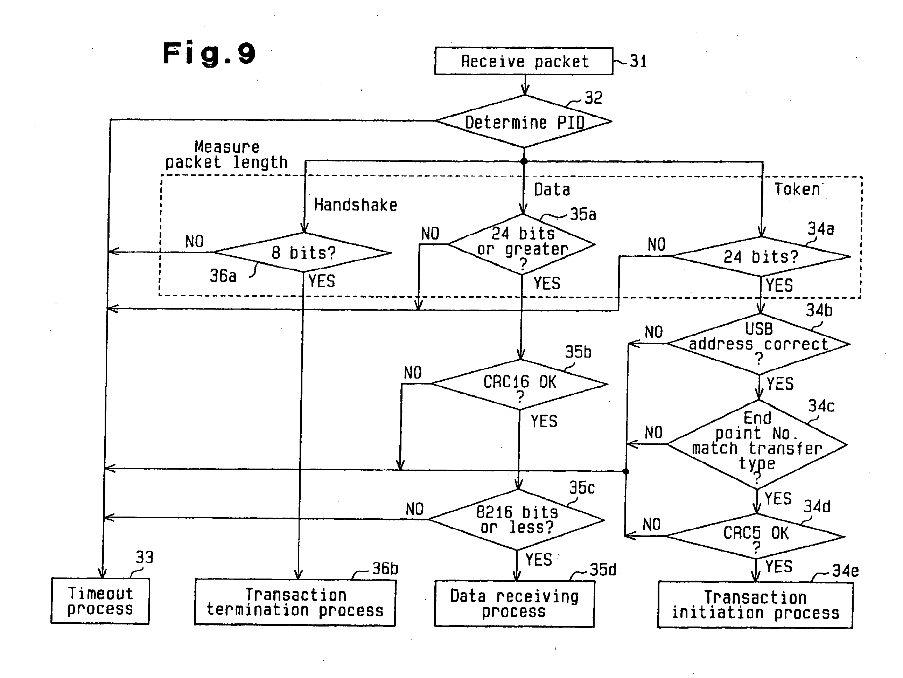

Fig. 9 is a flowchart illustrating packet determination performed by the data processor of Fig. 8;

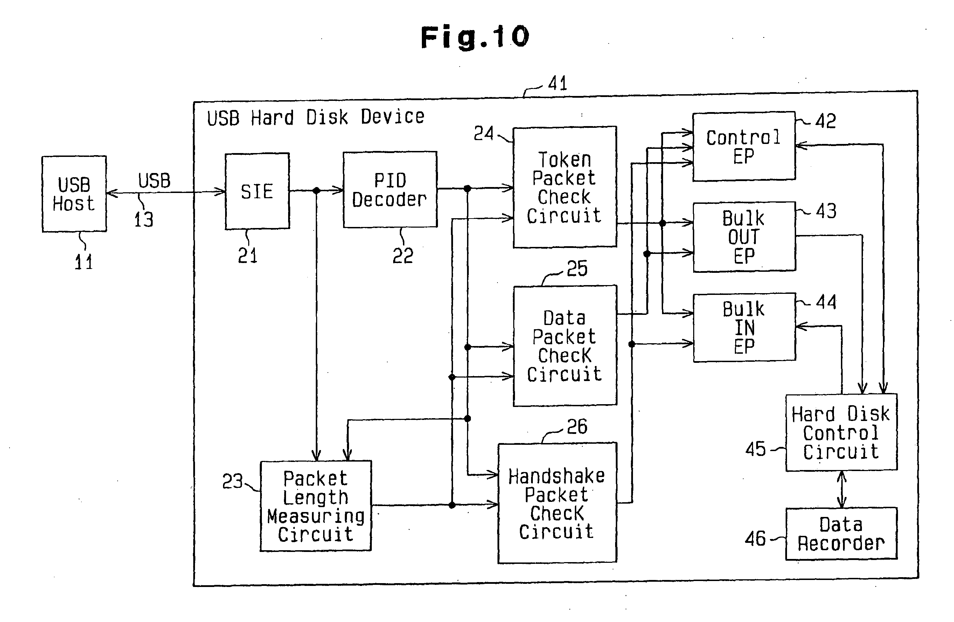

Fig. 10 is a block diagram illustrating an example in which the data processor of Fig. 8 is applied to a hard disc device;

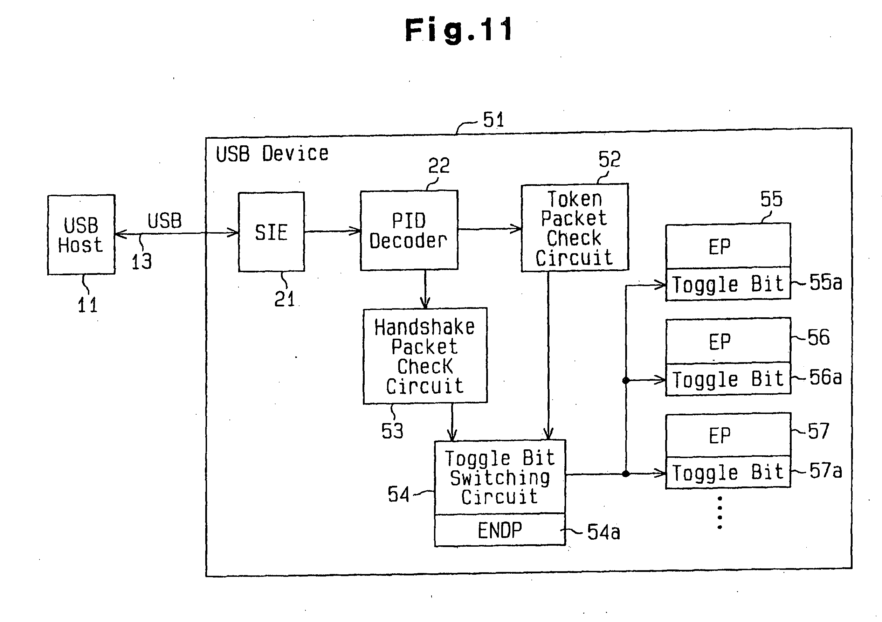

Fig. 11 is a schematic block diagram illustrating a data processor according to a second embodiment of the present invention;

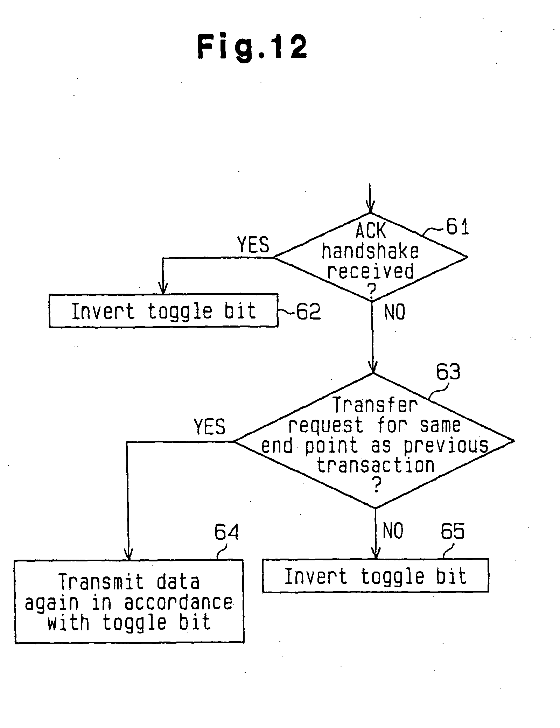

Fig. 12 is a flowchart illustrating the correction of a data toggle bit error performed by the data processor of Fig. 11;

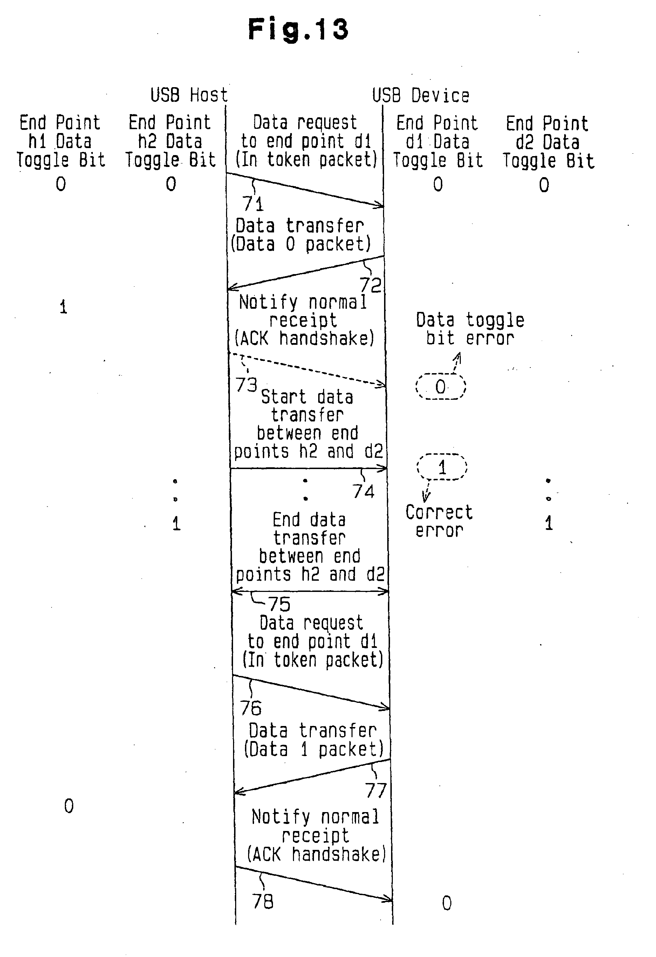

Fig. 13 is a flowchart illustrating a specific example of the data toggle error correction of Fig. 12; and

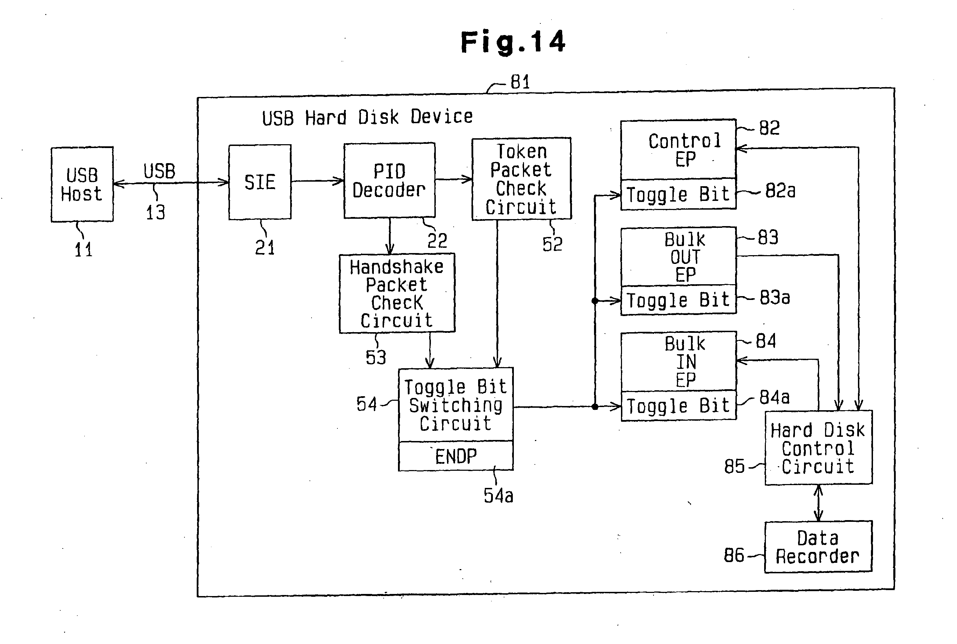

Fig. 14 is a block diagram illustrating an example in which the data processor of Fig. 11 is applied to a hard disc device.

In the drawings, like numerals are used for like elements throughout.

Fig. 8 is a schematic block diagram of a data processor (USB device) 12 according to a first embodiment of the present invention. A USB 13 connects the USB device 12 to a host computer (hereafter referred to as USB host) 11, which manages communication with the USB. The USB device 12 is, connected to the USB host 11, which is a personal computer, and is for example, an ATA/ATAPI (ATA packet interface) device for a hard disk, a magneto-optic (MO) disc, a digital versatile disc (DVD), a compact disc (CD), or the like or a peripheral device, such as a printer or a scanner. Fig. 8 shows part of the USB device 12 that serves as a packet recognition unit.

The USB device (packet recognition unit) 12 includes an SIE 21, a PID decoder 22, which functions as a packet determination circuit, a packet length measuring circuit 23, first to third packet check circuits 24 to 26, and a plurality of (only two shown for the sake of brevity) end points 27 and 28. In the first embodiment, the first packet check circuit 24 functions as a token packet check circuit, the second packet check circuit 25 functions as a data packet check circuit, and the third packet check circuit 26 functions as a handshake packet check circuit.

The SIE 21 decodes a packet received from the USB host 11 and converts the decoded packet to digital data. Then, the SIE 21 provides the digital data to the PID decoder 22 and the packet length measuring circuit 23.

The PID decoder 22 recognizes the type of the data (packet) received from the SIE 21 with the data pattern of the PID (packet ID). When the received packet is a token packet, the PID decoder 22 provides the token packet to the token packet check circuit 24. When the received packet is a data packet, the PID decoder 22 provides the data packet to the data packet check circuit 25. When the received packet is a handshake packet, the PID decoder 22 provides the handshake packet to the handshake packet check circuit 26.

The packet length measuring circuit 23 measures the packet length of the data (packet) received from the SIE 21. Then, the packet length measuring circuit 23 determines whether the packet length is in accordance with the packet type recognized from the PID.

More specifically, the packet length measuring circuit 23 determines that the received packet is a token packet when the measured packet length is twenty-four bits (refer to Fig. 1(a)). The packet length measuring circuit 23 determines that the received packet is a data packet when the measured packet length is 24 bits or greater and 8216 bits or less (refer to Fig. 1(b)). The packet length measuring circuit 23 determines that the received packet is a handshake packet when the measured packet length is eight bits (refer to Fig. 1(c)).

When the measured packet length is in accordance with the type of packet recognized by the PID decoder 22, the packet length measuring circuit 23 generates a start signal ST for starting processing with the packet check circuit that receives the packet data. When the measured packet length is not in accordance with the recognized packet type, the packet length measuring circuit 23 generates a suspension signal BR for suspending processing in the packet. check circuit that receives the packet data.

The token packet check circuit 24 performs processing for starting a transaction when receiving a token packet. When doing so, if the packet length measured by the packet length measuring circuit 23 is not in accordance with the token packet (the number of bits not being twenty-four bits), the token packet check circuit 24 suspends processing in accordance with the suspension signal BR.

The data packet check circuit 25 performs processing for receiving data when receiving a data packet. When doing so, if the packet length measured by the packet length measuring circuit 23 is not in accordance with the data packet (the number of bits being less than 24 bits or being 8217 or greater), the data packet check circuit 25 suspends processing in accordance with the suspension signal BR.

The handshake packet check circuit 26 performs processing for starting a transaction when receiving a handshake packet. When doing so, if the packet length measured by the packet length measuring circuit 23 is not in accordance with the handshake packet (the number of bits not being eight bits), the handshake packet check circuit 26 suspends processing in accordance with the suspension signal BR.

Each of the end points 27 and 28 is a first in first out (FIFO) provided with an inherent data storage section and a transfer function. Each transaction (e.g., IN transaction or OUT transaction) is performed using an associated one of the end points 27 and 28. For example, the IN transaction (transfer of data from the USB device 12 to the USB host 11) is performed with an end point provided with a transmitting type transfer function. An end point number (ENDP) indicating an FIFO characteristic is allocated to each of the end points 27 and 28.

Fig. 9 is a flowchart illustrating packet recognition process performed by the USB device 12.

When the USB device 12 receives a packet (step 31), the PID decoder 22 recognizes the packet type from the data pattern of the PID (step 32). If the PID is-not any one of the token packet, a data packet, or a handshake packet, the USE device 12 performs a timeout process, or suspends data processing (step 33).

In step 32, when the PID corresponds to a token packet, the packet length measuring circuit 23 determines whether the packet length is 24 bits (step 34a). If the packet length is not 24 bits, the packet length measuring circuit 23 performs the timeout process (step 33).

If the packet length is 24 bits, the token packet check circuit 24 determines whether the USB address (ADDR) is correct (step 34b) and whether the end point number (ENDP) matches the transfer type (step 34c). The token packet check circuit 24 also checks whether the CRC5 is normal (step 34d). Steps 34b to 34d are respectively identical to steps 94a to 94c of Fig. 4 and will thus not be described.

The token packet check circuit 24 performs a process for starting a transaction only when an error is not detected in each of steps 34b to 34d (step 34e). If an error is detected in any one of steps 34b to 34d, the check circuit 24 performs the timeout process (step 33).

When the PID corresponds to a data packet in step 32, the packet length measuring circuit 23 determines whether the packet length is 24 bits or greater (step 35a). When the packet length is less than 24 bits, the packet length measuring circuit 23 determines that there is an error and performs the timeout process (step 33).

If the packet length is 24 bits or greater, the data packet check circuit 25 checks whether the data field (DATA) is correct (step 34b) with the CRC16 (step 35b). Step 35b is identical to step 95a of Fig. 4. If an error is detected in step 35b, the check circuit 25 performs the timeout process (step 33).

When an error is not detected in step 35b (i.e., DATA being correct data), the packet length measuring circuit 23 determines whether the packet length is 8216 bits or less (step 35c). If the packet length is 8217 bits or greater, the packet length measuring circuit 23 performs a timeout process (step 33). If the packet length is 8216 bits or less, the data packet check circuit 25 performs a process for receiving data (step 35d).

When the PID corresponds to the handshake packet in step 32, the packet length measuring circuit 23 determines whether the packet length is eight bits (step 36a). When the packet length is not eight bits, the packet length measuring circuit 23 performs the timeout process (step 33). If the packet length is eight bits, the handshake packet check circuit 26 performs a process for ending the transaction (step 36b).

Fig. 10 is a schematic block diagram showing an example in which the data process (packet recognition unit) of the first embodiment is applied to a USB hard disk device 41. The USB hard disk device 41 complies with the USB Mass Storage Class Bulk Only Mode 1.0 and has first to third end points 42 to 44. Each of the end points 42 to 44 are connected to a hard disk control circuit 45, which is further connected to a data recorder 46.

The first end point 42 (Control EP in Fig. 10) is an FIFO provided with a transmitting-receiving type transfer function. Further, the first end point 42 is mainly used to initialize a device.

The second end point 43 (Bulk OUT EP in Fig. 10) is an FIFO provided with a receiving type transfer function. Further, the second end point 43 is used to write data to the hard disk and to transfer a command. The third end point 44 (BULK IN EP in Fig. 10) is an FIFO provided with a transmitting type transfer function. Further, the third end point 44 is used to read data from the hard disk and to transfer a command.

The USB device (packet recognition unit), or the data processor of the first embodiment, has the advantages described below.
(1) The USE device (packet recognition unit) 12 includes a PID decoder 22, which recognizes the type of the received packet from the data pattern of the PID, and the packet length measuring circuit 23, which determines whether the recognition result of the PID decoder 22 is correct by measuring the packet length. Thus, even if the data value of the signal transmitted through the USB 13 changes due to reflection or noise in a cable (USB 13), erroneous packet determinations in the USB device 12 are reduced. This prevents the transmission efficiency from being decreased. As a result, the performance capacity of the entire system does not decrease.
(2) When the packet length measured by the packet length measuring circuit is not in accordance with the packet type recognized by the PID decoder, the processing of the packet in the associated one of the first to third packet check circuits 24 to 26 is suspended. Thus, when a determination error of a packet occurs, the error is detected at an early stage, and the transmission efficiency is improved.

Fig. 11 is a schematic block diagram of a data processor (USB device) 51 according to a second embodiment of the present invention. A USB 13 connects the USB device 51 to a USB host 11. Fig. 11 shows a section of the USB device 51 that is related with a data toggle bit correction unit (hereafter simply referred to as an error correction unit).

The USB device (error correction unit) 51 includes an SIE 21, a PID decoder 22, first and second packet check circuits 52 and 53, a toggle bit switching circuit 54, and a plurality of (only three shown for the sake of brevity) end points 55 to 57.

In the second embodiment, the first packet check circuit 52 is a token packet check circuit, and the second packet check circuit 53 is a handshake packet check circuit. In the same manner as the first embodiment, the USB device 51 also has a data packet check circuit (not shown).

Each of the end points 55 to 57 is an FIFO having an inherent data storage section and a transfer function (receiving type, transmitting type, and transmitting-receiving type). Each transaction is performed by using an associated one of the end points 55 to 57. An end point number (ENDP) indicating an FIFO characteristic is allocated to each of the end points 55 to 57.

The end points 55 to 57 respectively include sections (as indicated by toggle bit in Fig. 11) for storing data toggle bits indicating whether the corresponding transactions have been normally completed. In each of the sections 55a to 57a, a data toggle bit having the value of "0" or "1" is stored in accordance with the processing status of the transaction.

The toggle bit switching circuit 54 is connected to the first and second packet check circuits 52 and 53 and to the end points 55 to 57. The toggle bit switching circuit 54 has a storage section 54a for storing the end point number (ENDP) of the token packet received by the token packet check circuit 52. The storage section 54a stores the end point number (ENDP) indicating the end point used to transfer data in the transaction that is currently being performed (i.e., the end point receiving the transfer request).

When the handshake packet check circuit 53 receives the handshake packet, the toggle bit switching circuit 54 changes (inverts) the data toggle bit of the end point receiving the transfer request in the transaction.

Fig. 12 is a flowchart illustrating a data toggle bit error correction process (hereinafter simply referred to as error correction process) performed by the USB device (error correction unit) 51.

First, an IN transaction is performed between the USB host 11 and the USB device 51. The USB host 11 transmits an ACK handshake packet to the USB device 51. In this state, the end point receiving a transfer request in the IN transaction is, for example, the first end point 55.

The toggle bit switching circuit 54 determines whether the handshake packet check circuit 53 has received the ACK handshake packet (step 61). The switching circuit 54 inverts the value of the data toggle bit stored in the first end point when the ACK handshake packet has been received (step 61). For example, the switching circuit 54 changes the value of the data toggle bit from "0" to "1" (step 62). This ends the IN transaction.

In step 61, the first end point 55 has a data toggle bit error when the handshake packet check circuit 53 has not received the ACK handshake packet. In this case, the value of the data toggle bit value stored in section 55a is not changed. Thus, the value of the data toggle bit continues to be "0".

Subsequently, in the state in which there is a data toggle bit error, the next transaction is started between the USB host 11 and the USB device. A token packet is transmitted from the USB host 11 to the USB device 51.

When receiving the token packet, the token packet check circuit 52 notifies the toggle bit switching circuit 54 of the end point number (ENDP) included in the token packet data. The toggle bit switching circuit 54 compares the end point number received from the token packet check circuit 52 with the end point number used in the previous transaction (in this example, the end point number corresponding to the first end point 55). In other words, the toggle bit switching circuit 54 determines whether the present transaction is for the end point 55, which also received a transfer request in the previous transaction (step 63).

In this state, when the present transaction is a transfer request to the first end point 55, in which a data toggle bit error has occurred, the USB device 51 retransmits the data packet to the USB host 11 (step 64).

More specifically, when transfer requests (IN transaction) are consecutively sent to the first end point 55, this indicates that the data packet transmitted from the USB device 51 has been received by the USB host 11 in an abnormal state. Since the data packet was not received in the previous IN transaction, the USB host 11 requests the first end point 55 again for the transfer of data. In this case, the USB device 51 transmits the data packet again to the first end point 55, in which there is an error, in accordance with the data toggle bit (in this example, "0").

In step 63, if the present transaction is a transfer request to an end point that differs from the first end point 55, the data toggle bit value of the first end point 55, which is in an erroneous state, is inverted (step 65).

More specifically, a transfer request to a different end point indicates that the ACK handshake packet transmitted from the USB host 11 was not received by the USB device 51 for one reason or another. In other words, the USB host 11 received a data packet in a normal state during the previous IN transaction and transmitted the ACK handshake packet. Accordingly, in this case, the USB device 51 inverts the data toggle bit value of the first end point 55, in which there is an error. In this example, the value of the data toggle bit stored in the section 55a of the first end point is changed from "0" to "1".

Fig. 13 is a flowchart illustrating a specific example of an error correction process.

The USB host 11 starts a transaction between its end point h1 and an end point d1 of the USB device 51. More specifically, the USB host 11 transmits an IN token packet to request data transfer (step 71). In response to the IN token packet, the USB device 51 transmits a data 0 packet corresponding to the value "0" of the data toggle bit stored in the end point d1 (step 72). When receiving the data 0 packet, the USB host 11 changes the data toggle bit of the end point h1 from "0" to "1" and transmits the ACK handshake packet to the USB device 51 (step 73).

In this state, when the USB device 51 does receive the ACK handshake packet for one reason or another (as indicated by the broken line in Fig. 13), the USB device 51 does not change the data toggle bit value of the end point d1 from "0". In other words, a data toggle bit error occurs in the end point d1.

In this state, the USB host 11 starts the next (second) transaction between the end point h2 and the end point d2 of the USB device 51 (step 74). The transaction will not be described in detail. In this state, the USB device 51 determines that the USB host has transmitted the ACK handshake packet in the previous IN transaction (step 73) and inverts the value of the end point d1, which has an error. In other words, the value of the end point d1 is corrected from "0" to "1".

Subsequently, when the second transaction ends normally, that is, when one of the USB host 11 and the USB device 51 receives an ACK handshake packet from the other one of the USB host 11 and the USB device 51 (step 75), the data toggle bits of the end point h2 and the end point d2 are respectively changed from "0" to "1".

The USB host 11 then starts the next (third) transaction between the end point h1 and the end point d1 of the USB device 51. More specifically, the USB host 11 transmits an IN token packet to request data transfer (step 76). In response to the IN token packet, the USB device 51 transmits a data 1 packet to the USB host 11 in accordance with the value "1" of the data toggle bit stored in the end point d1 (step 77). In this state, the USB device 51 has corrected the data toggle bit error of the end point d1 in step 74. Accordingly, the USB host 11 receives the data it requested for from the USB device 51 in the third IN transaction, that is, the data 1 packet.

When receiving the data 1 packet, the USB host 11 transmits the handshake packet to the USB device 51 (step 78) and changes the data toggle bit value of the end point h1 from "1" to "0". When receiving the ACK handshake packet, the USB device 51 changes the data toggle bit value of the end point d1 from "1" to "0".

Fig. 14 is a schematic block diagram showing an example in which the data processor (error correction unit) of the second embodiment is applied to a USB hard disk device 81.

The USB hard disk device 81 complies with the USB Mass Storage Class Bulk Only Mode 1.0 and has first to third end points 82 to 84. The end points 82 to 84 respectively have sections 82a to 84a for storing data toggle bits. Each of the end points 82 to 84 are connected to a hard disk control circuit 85, which is further connected to a data recorder 86.

The first end point 82 (Control EP in Fig. 14) is an FIFO provided with a transmitting-receiving type transfer function. Further, the first end point 82 is mainly used to initialize a device.

The second end point 83 (Bulk OUT EP in Fig. 14) is an FIFO provided with a receiving type transfer function. Further, the second end point 83 is used to write data to the hard disk and to transfer a command. The third end point 84 (BULK IN EP in Fig. 14) is an FIFO provided with a transmitting type transfer function. Further, the third end point 84 is used to read data from the hard disk and to transfer a command.

The USB device (error correction unit), or the data processor of the second embodiment, has the advantages described below.
(1) The USB device (error correction unit) 51 has the toggle bit switching circuit 54. When receiving an ACK handshake packet of a predetermined transaction, the toggle bit switching circuit 54 inverts the data toggle bit value of the end point that receives a transfer request in the predetermined transaction. When the token packet check circuit 52 receives a token packet and if the end point that received a transfer request in the present transaction differs from the end point that received a transfer request in the previous transaction, the toggle bit switching circuit 54 inverts the data toggle bit of the end point that received the transfer request in the previous transaction to correct a data toggle bit error. Thus, even if a data toggle bit error occurs, the error is detected and corrected at an early stage. This prevents the transmission efficiency from being decreased. As a result, the performance capacity of the entire system does not decrease.
(2) Data toggle bit errors are detected and corrected at an early stage. This prevents unnecessary transactions from being performed and enables immediate response to a transfer request from the USB host. As a result, the transmission efficiency is improved.

It should be apparent to those skilled in the art that the present invention may be embodied in many other specific forms. Particularly, it should be understood that the present invention may be embodied in the following forms.

The USB device 12 of the first embodiment may have the error correction unit of the second embodiment. Further, the USB device of the second embodiment may have the packet recognition unit of the first embodiment.

In the first embodiment, the determination of whether the packet length of the data packet is 8216 bits or less may be performed when executing step 35a or after executing step 35a.

In the first embodiment, the packet recognition unit may be applied to an ATA/ATAPI device for an MO, a DVD, a CD and the like or to a peripheral device of a personal computer, such as a printer or a scanner.

The present examples and embodiments are to be considered as illustrative and not restrictive.

## Claims

1. A data processor for communicating data to and from a host computer via an interface with a packet including a packet ID, the data processor being **characterized by**:
a packet recognition circuit (22) for receiving the packet including the packet ID from the host computer and recognizing the type of the packet from the packet ID; and
a packet length measuring circuit (23) connected to the packet recognition circuit for measuring packet length of the packet received from the host computer and determining whether the measured packet length is in accordance with the packet type recognized by the packet determination circuit.

2. The data processor according to claim 1, **characterized in that** the packet length measuring circuit generates a suspension signal for suspending data transfer from the data processor to the host computer when the measured packet length is not in accordance with the packet type.

3. The data processor according to claim 1 or 2, **characterized in that** the interface includes a USB interface.

4. A data processor for communicating data to and from a host computer via an interface, the data processor being **characterized by**:
a plurality of end points (55-57), each processing a transaction corresponding to a data transfer request from the host computer, wherein each of the end points stores a data toggle bit having a value that is inverted whenever a predetermined packet from the host computer is received; and
a toggle bit switching circuit (54) connected to the end points to determine whether a first end point that received a transfer request in a previous transaction and a second end point that received a transfer request in the present transaction are substantially the same, wherein the toggle bit switching circuit inverts the value of the data toggle bit stored in the first end point when the first end point differs from the second end point.

5. The data processor according to claim 4, **characterized in that**:
each end point has an end point number, and the predetermined packet includes the end point number; and
the toggle bit switching circuit includes an end point storage section (54a) for storing the end point number included in the predetermined packet transmitted from the host computer and determines whether the first and second end points are substantially the same by comparing the end point number of the first end point stored in the storage section with the end point number of the second end point.

6. The data processor according to claim 5, **characterized in that** the interface includes a USB interface, and the end point is included in a token packet.

7. The data processor according to claim 4, 5 or 6, **characterized in that** the toggle bit switching circuit inverts the data toggle bit value of the first end point when receiving a handshake packet from the host computer.

8. The data processor according to claim 4, 5, 6 or 7, **characterized in that** the interface includes a USB interface.

9. A data processor for communicating data to and from a host computer via a predetermined interface with a packet including a packet ID, the data processor being **characterized by**:
a packet recognition circuit (22) for receiving the packet including the packet ID from the host computer and recognizing the type of the packet from the packet ID;
a packet length measuring circuit (23) connected to the packet recognition circuit for measuring packet length of the packet received from the host computer and determining whether the measured packet length is in accordance with the packet type recognized by the packet determination circuit;
a plurality of end points (55-57), each processing a transaction corresponding to a data transfer request from the host computer, wherein each of the end points stores a data toggle bit having a value that is inverted whenever receiving a predetermined packet from the host computer; and
a toggle bit switching circuit (54) connected to the end points to determine whether a first end point that received a transfer request in a previous transaction and a second end point that received a transfer request in the present transaction are substantially the same, wherein the toggle bit switching circuit inverts the value of the data toggle bit stored in the first end point when the first end point differs from the second end point.

10. The data processor according to claim 9, **characterized in that** the interface includes a USB interface.

11. A method for recognizing the type of a packet, which includes a predetermined packet length and a packet ID, in a data processor communicating data to and from a host computer via an interface, the method being
**characterized by** the steps of:
receiving the packet from the host computer via the interface;
recognizing the type of the received packet from the packet ID;
measuring a packet length of the received packet; and
determining whether the measured packet length is in accordance with the packet type recognized from the packet ID.

12. The method according to claim 11, further **characterized by**:
suspending transfer of data related with the received packet when the measured packet length is not in accordance with the packet type recognized from the packet ID.

13. The method according to claim 11 or 12, **characterized in that** the interface includes a USB interface.

14. A method for correcting an error in a data processor communicating data to and from a host computer via an interface, wherein the data processor includes a plurality of end points, each processing a transaction corresponding to a data transfer request from the host computer, and each of the end points storing a data toggle bit having a value that is inverted whenever a normal receipt acknowledgement from the host computer is received, and the error is a data toggle bit error in which the data toggle bit is not inverted when the data processor does not receive the normal receipt acknowledgement from the host computer, the method being **characterized by** the steps of:
determining whether a first end point of the plurality of end points that received a transfer request in a previous transaction and a second end point of the plurality of end points that received a transfer request in the present transaction are substantially the same; and
inverting the value of the data toggle bit stored in the first end point when the first end point differs from the second end point.

15. The method according to claim 14, further **characterized by**:
re-transmitting data in accordance with the value of the data toggle bit stored in the first end point when the first and second end points are substantially the same.

16. The method according to claim 14 or 15, **characterized in that** each of the end points has an end point number, and said determining includes determining whether the first and second end points are substantially the same by comparing the end point number of the first end point with the end point number of the second end point.

17. The method according to claim 14, 15 or 16, **characterized in that** the interface includes a USB interface.

18. A method for controlling a data processor communicating data to and from a host computer via a USB interface, wherein the data processor includes a plurality of end points, each processing a transaction corresponding to a data transfer request from the host computer, and each of the end points storing a data toggle bit having a value that is inverted whenever a handshake packet from the host. computer is received, the method being **characterized by** the steps of:
determining whether a first end point of the plurality of end points that received a transfer request in a previous transaction and a second end point of the plurality of end points that received a transfer request in the present transaction are substantially the same; and
inverting the value of the data toggle bit stored in the first end point when the first end point differs from the second end point.

19. The method according to claim 18, further **characterized by**:
re-transmitting data in accordance with the value of the data toggle bit stored in the first end point when the first and second end points are substantially the same.

20. The method according to claim 18 or 19, **characterized in that** each of the end points has an end point number, and said determining includes determining whether the first and second end points are substantially the same by comparing the end point number of the first end point with the end point number of the second end point.
